# EUROPEAN PATENT APPLICATION

(11) **EP 4 668 378 A2**
(43) Date of publication of application: **24.12.2025**
(21) Application number: 25173138.6
(22) Date of filing: 29.04.2025
(51) Int. Cl.: H01M 8/04664, H01M 8/04694, H01M 8/04746, H01M 8/04858, H01M 8/04955, H01M 10/44, H01M 10/46, H01M 16/00, H02J 7/00

(54) **FUEL CELL MODULE**

(30) Priority: 29.05.2024 JP 2024087141
(71) Applicant: KABUSHIKI KAISHA TOYOTA JIDOSHOKKI, Kariya-shi, Aichi-ken, 448-8671 (JP)
(72) Inventor: SUZUKI, Keiya, Kariya-shi, Aichi, 448-8671 (JP)
(74) Representative: TBK

(57) **Abstract**

A fuel cell module (FCM) includes a fuel cell stack (FCS), and a controller (Cnt) configured to start power generation of the fuel cell stack (FCS) when a charging rate of a power storage device (B) directly connected between the fuel cell stack (FCS) and a load (Lo) becomes a lower limit value or less, and configured to stop power generation of the fuel cell stack (FCS) when the charging rate of the power storage device (B) becomes an upper limit value or more. The fuel cell stack (FCS) is connected to the power storage device (B) not through a power conversion circuit, and the controller (Cnt) changes at least one of the lower limit value and the upper limit value based on a deterioration degree of the fuel cell stack (FCS).

## Description

### BACKGROUND ART

The present invention relates to a fuel cell module.

As a fuel cell module, there is a fuel cell module in which a power storage device is directly connected between a fuel cell stack and a load, and when a charging rate of the power storage device becomes a lower limit value or less, power generation of the fuel cell stack is started to increase the charging rate and a voltage of the power storage device, and when the charging rate of the power storage device becomes an upper limit value or more, the power generation of the fuel cell stack is stopped to stop increasing the charging rate and the voltage of the power storage device. As a result, since the power storage device is directly connected between the fuel cell stack and the load, even when the output voltage of the fuel cell stack varies depending on the voltage of the power storage device, it is suppressed that an operating point of the fuel cell stack (any point on an I-V characteristic (I-V curve) indicating a correspondence relationship between an output current and an output voltage of the fuel cell stack) becomes too deep or too shallow (the output voltage of the fuel cell stack becomes too low or too high), and the fuel cell stack can be caused to generate power at an appropriate operating point. Japanese Patent Application Publication No. 2014-27823 discloses a related technique.

In general, when the fuel cell stack deteriorates, the I-V characteristic of the fuel cell stack changes.

Therefore, in the above-described fuel cell module, when the I-V characteristic changes with the deterioration of the fuel cell stack, there is a possibility that the fuel cell stack cannot be caused to generate power at the appropriate operating point.

The present invention is directed to providing a fuel cell module in which a power storage device is directly connected between the fuel cell stack and a load and that causes a fuel cell stack to generate power at an appropriate operating point even when the fuel cell stack deteriorates.

### SUMMARY

In accordance with an aspect of the present invention, a fuel cell module includes a fuel cell stack, and a controller configured to start power generation of the fuel cell stack when a charging rate of a power storage device directly connected between the fuel cell stack and a load becomes a lower limit value or less, and configured to stop power generation of the fuel cell stack when the charging rate of the power storage device becomes an upper limit value or more. The fuel cell stack is connected to the power storage device not through a power conversion circuit, and the controller changes at least one of the lower limit value and the upper limit value based on a deterioration degree of the fuel cell stack.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a diagram illustrating an example of a fuel cell module according to an embodiment;
FIG. 2 is a flowchart illustrating operations of a controller;
FIG. 3 is a table showing an example of information indicating correspondence relationships between deterioration degrees and a lower limit value and correspondence relationships between the deterioration degrees and an upper limit value;
FIG. 4A is a diagram showing an example of an SOC-OCV characteristic of a power storage device, and FIG. 4B is a diagram showing an example of I-V characteristic of a fuel cell stack;
FIG. 5 is a diagram illustrating a modification of the fuel cell module according to the embodiment; and
FIG. 6A is a diagram showing a variation example of an operating point of a fuel cell stack when only a lower limit value is changed, and FIG. 6B is a diagram showing a variation example of the operating point of the fuel cell stack when only an upper limit value is changed.

### DETAILED DESCRIPTION OF THE EMBODIMENTS

Hereinafter, embodiments will be described in detail with reference to the drawings.

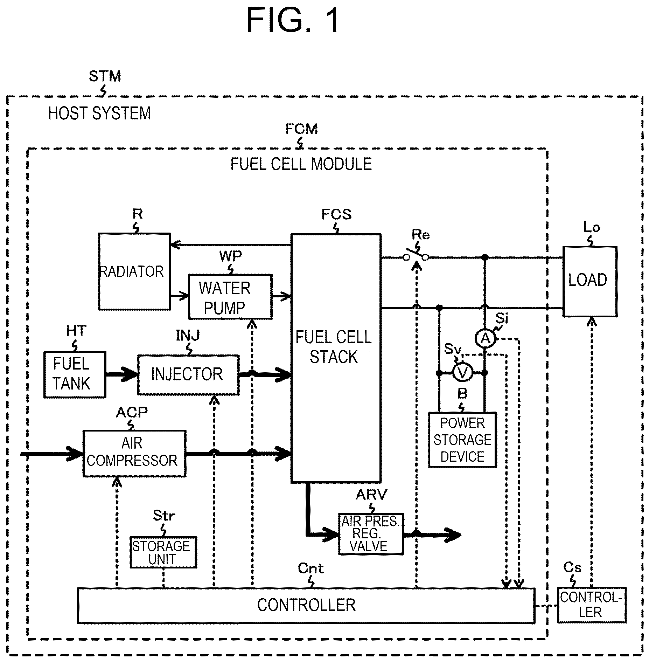

FIG. 1 is a diagram illustrating an example of a fuel cell module according to an embodiment.

A fuel cell module FCM illustrated in FIG. 1 supplies power to a load Lo included in a host system STM. The host system STM includes a controller Cs that controls an operation of the load Lo, in addition to the fuel cell module FCM and the load Lo. For example, when the host system STM is a vehicle such as a forklift, a towing tractor, or an automatic guided vehicle (AGV), the load Lo is an inverter circuit that drives a cargo handling device, a traveling motor, or the like. In addition, when the host system STM is a stationary generator such as an industrial stationary generator, a household stationary generator, or an emergency stationary generator, the load Lo is an industrial machine, a home appliance, or the like.

The fuel cell module FCM includes a fuel cell stack FCS as a main device, and a plurality of types of auxiliary devices for causing the fuel cell stack FCS to generate power.

That is, the fuel cell module FCM includes a fuel tank HT, an injector INJ, and the like as a fuel gas system auxiliary device.

The fuel cell module FCM includes an air compressor ACP, an air pressure regulating valve ARV, and the like as an oxidant gas system auxiliary device.

The fuel cell module FCM includes a radiator R, a water pump WP, and the like as a cooling system auxiliary device.

The fuel cell module FCM includes a power storage device B, a relay Re, a voltage sensor Sv, a current sensor Si, and the like as an electrical system auxiliary device.

The fuel cell module FCM further includes a storage unit Str and a controller Cnt.

The fuel cell stack FCS includes a plurality of fuel cells connected in series, and generates electricity by an electrochemical reaction between hydrogen contained in fuel gas (hydrogen gas or the like) and oxygen contained in oxidant gas (air or the like). The fuel cell is a polymer electrolyte fuel cell (PEFC).

The fuel tank HT is a fuel gas storage container. The fuel gas stored in the fuel tank HT is supplied to the fuel cell stack FCS via the injector INJ.

The injector INJ adjusts a flow rate of the fuel gas supplied to the fuel cell stack FCS.

The air compressor ACP compresses oxidant gas present around the fuel cell module FCM and supplies the compressed oxidant gas to the fuel cell stack FCS.

The air pressure regulating valve ARV adjusts the pressure and flow rate of the oxidant gas supplied to the fuel cell stack FCS.

The radiator R exchanges heat between cooling water heated by heat generation of the fuel cell stack FCS and outside air.

The water pump WP supplies the cooling water cooled by the radiator R to the fuel cell stack FCS.

The power storage device B includes a plurality of secondary batteries (such as lithium ion batteries and lithium ion capacitors), and is connected to a connection point at which the fuel cell stack FCS and the load Lo are directly connected, via the relay Re instead of a DC-DC converter. That is, it is assumed that the power storage device B is directly connected between the fuel cell stack FCS and the load Lo, and the DC-DC converter as a power conversion circuit is not connected between the fuel cell stack FCS, and the load Lo and the power storage device B. In other words, the fuel cell stack FCS is connected to the power storage device B not through the power conversion circuit. The power output from the fuel cell stack FCS is supplied to the auxiliary devices such as the air compressor ACP and the water pump WP, the load Lo, and the power storage device B. When supply power corresponding to a difference between the power output from the fuel cell stack FCS and the power supplied to the auxiliary devices is larger than request power from the load Lo, power corresponding to the request power in the supply power is supplied to the load Lo, and the remaining power is supplied to the power storage device B. When the power is supplied from the fuel cell stack FCS to the power storage device B, the power storage device B is charged, and a charging rate of the power storage device B (a ratio [%] of a remaining capacity to a full charge capacity of the power storage device B) increases. When regenerative power supplied from the load Lo to the fuel cell module FCM is supplied to the power storage device B, the power storage device B is charged, and the charging rate of the power storage device B increases. When the supply power corresponding to the difference between the power output from the fuel cell stack FCS and the power supplied to the auxiliary devices is smaller than the request power from the load Lo, the supply power is supplied to the load Lo, and the power corresponding to the shortage is supplied from the power storage device B to the load Lo. When the power is supplied from the power storage device B to the load Lo, the power storage device B is discharged, and the charging rate of the power storage device B decreases.

The relay Re is connected between the connection point of the load Lo and the power storage device B and the fuel cell stack FCS. When the relay Re is in a closed state, the relay Re electrically connects the load Lo and the power storage device B to the fuel cell stack FCS. When the relay Re is in an opened state, the relay Re electrically disconnects the load Lo and the power storage device B from the fuel cell stack FCS. When the relay Re is in the closed state, the fuel cell stack FCS and the power storage device B are directly connected to each other, so that the output voltage of the fuel cell stack FCS follows a voltage of the power storage device B. The relay Re may be omitted.

The voltage sensor Sv detects a voltage V of the power storage device B and sends the detected voltage V to the controller Cnt.

The current sensor Si detects a current I flowing through the power storage device B, and sends the detected current I to the controller Cnt.

The storage unit Str includes a nonvolatile memory such as a read only memory (ROM) or a flash memory. For example, the storage unit Str stores information D or the like to be described later.

The controller Cnt includes a microcomputer or the like, and controls an operation of each auxiliary device such that the charging rate of the power storage device B varies within a range from the lower limit value to the upper limit value, thereby controlling the power generation of the fuel cell stack FCS. It is assumed that the lower limit value and the upper limit value are set such that the voltage required from the power storage device B is included in a range from the voltage of the power storage device B corresponding to the lower limit value to the voltage of the power storage device B corresponding to the upper limit value. In this case, the type of the secondary battery, the number of cells of the secondary battery, or the like constituting the power storage device B may be determined such that the power storage device B is not brought into an overdischarge state or an overcharge state (for example, a charging rate around 50% is included in the range from the lower limit value to the upper limit value) by the power supplied from the power storage device B to the load Lo or the power regenerated from the load Lo to the power storage device B. The type and the number of the fuel cells constituting the fuel cell stack FCS may be determined such that an operating point when the deterioration of the fuel cell stack FCS progresses is not included in the range from the operating point of the fuel cell stack FCS (any point on the I-V characteristic (I-V curve) indicating the correspondence relationship between the output current and the output voltage of the fuel cell stack FCS) corresponding to the lower limit value to the operating point of the fuel cell stack FCS corresponding to the upper limit value. That is, it may be so configured that the required voltage of the load Lo is included in the range from the voltage of the power storage device B corresponding to the lower limit value to the voltage of the power storage device B corresponding to the upper limit value, and the operating point when the deterioration of the fuel cell stack FCS progresses is not included in the range from the operating point of the fuel cell stack FCS corresponding to the upper limit value to the operating point of the fuel cell stack FCS corresponding to the lower limit value.

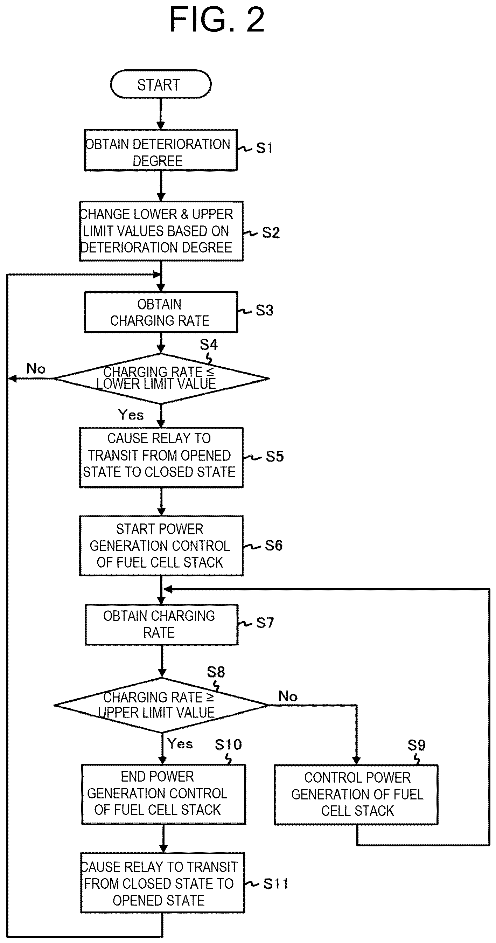

FIG. 2 is a flowchart illustrating an example of operations of the controller Cnt. Note that the relay Re is in an opened state while the power generation of the fuel cell stack FCS is stopped.

First, when the controller Cnt is started by sending a start instruction or the like from the controller Cs to the controller Cnt, the controller Cnt obtains the deterioration degree of the fuel cell stack FCS (step S1). It is assumed that the deterioration degree increases as the deterioration of the fuel cell stack FCS progresses. For example, the controller Cnt sets the integrated value of the power generation time of the fuel cell stack FCS from the time of factory shipment of the fuel cell module FCM to the present as the deterioration degree of the fuel cell stack FCS. Alternatively, the controller Cnt may set the internal resistance (impedance) of the fuel cell stack FCS, which is obtained based on the voltage V and the current I, as the deterioration degree of the fuel cell stack FCS. The internal resistance (impedance) of the fuel cell stack FCS can be obtained by a known method, and the deterioration degree of the fuel cell stack FCS can be obtained in advance based on a correlation relationship between an operating time and a change in the internal resistance.

Next, the controller Cnt changes the lower limit value and the upper limit value of the charging rate of the power storage device B based on the deterioration degree obtained in step S1 (step S2). For example, the controller Cnt refers to the information D indicating the correspondence relationship between the deterioration degree and the lower limit value and the correspondence relationship between the deterioration degree and the upper limit value stored in advance in the storage unit Str, and obtains the lower limit value and the upper limit value corresponding to the deterioration degree obtained in step S1.

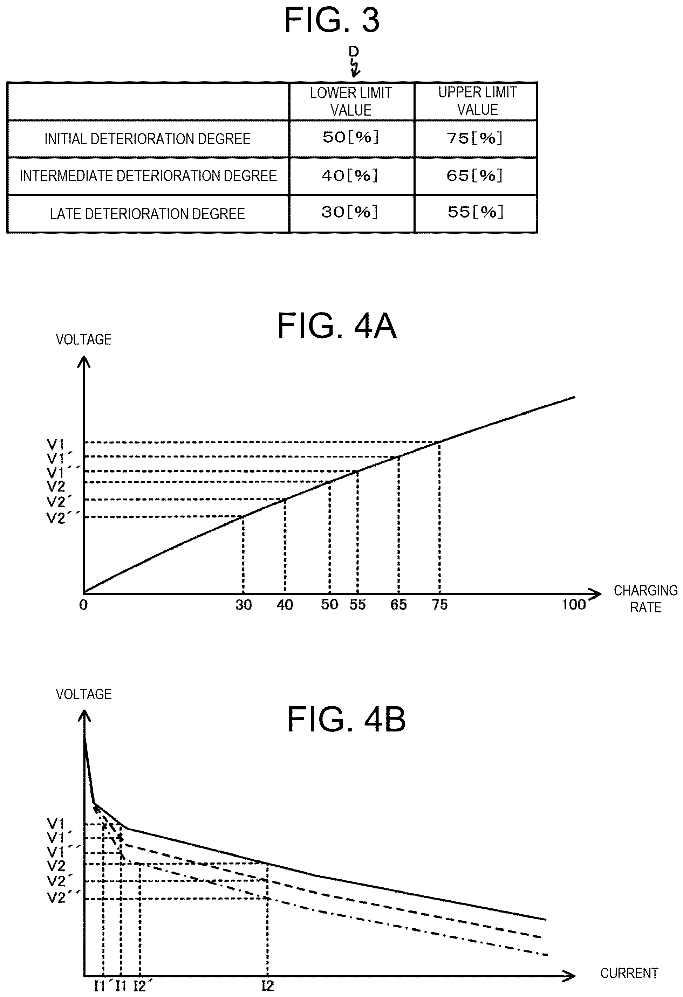

Here, FIG. 3 is a table showing an example of the information D. It is assumed that initial deterioration degree < intermediate deterioration degree < late deterioration degree is established. For example, it is assumed that the deterioration degree of the fuel cell stack FCS at the time of factory shipment is the initial deterioration degree, then the deterioration degree changes from the initial deterioration degree to the intermediate deterioration degree as the deterioration of the fuel cell stack FCS progresses, and further the deterioration degree changes from the intermediate deterioration degree to the late deterioration degree as the deterioration of the fuel cell stack FCS progresses.

In the information D shown in FIG. 3, the lower limit value corresponding to the initial deterioration degree is set to "50%", the upper limit value corresponding to the initial deterioration degree is set to "75%", the lower limit value corresponding to the intermediate deterioration degree is set to "40%", the upper limit value corresponding to the intermediate deterioration degree is set to "65%", the lower limit value corresponding to the late deterioration degree is set to "30%", and the upper limit value corresponding to the late deterioration degree is set to "55%". When obtaining the lower limit value and the upper limit value with reference to the information D shown in FIG. 3, the controller Cnt decreases the lower limit value and the upper limit value as the deterioration degree increases. The number of deterioration degrees in the information D is not limited to three, and may be two or four or more. That is, the number of stages of the deterioration degree is not limited to three stages of the initial stage, the intermediate stage, and the late stage, and may be two stages or four or more stages. The change range of the lower limit value or the upper limit value in the information D is not limited to 10%.

In the flowchart illustrated in FIG. 2, the controller Cnt obtains the charging rate of the power storage device B (step S3). For example, the controller Cnt refers to the information indicating a correspondence relationship between the charging rate of the power storage device B and an open-circuit voltage, which is stored in advance in the storage unit Str, and obtains the charging rate corresponding to the open-circuit voltage of the power storage device B calculated by the voltage V as the charging rate of the power storage device B. Alternatively, the controller Cnt obtains a calculation result of "the charging rate obtained at the previous control timing" + "the integrated value of the current I from the previous control timing to the current control timing" / "the full charge capacity of the power storage device B" × 100 as the charging rate of the power storage device B.

Next, if the charging rate obtained in step S3 is larger than the lower limit value (step S4: No), then the controller Cnt maintains the power generation stop state of the fuel cell stack FCS, maintains the opened state of the relay Re, and executes the processing of step S3 again.

On the other hand, if the charging rate obtained in step S3 becomes the lower limit value or less (step S4: Yes), then the controller Cnt causes the relay Re to transit from the opened state to the closed state (step S5), and starts power generation control of the fuel cell stack FCS (step S6). Note that the controller Cnt may execute the processing of step S5 and the processing of step S6 in an interchanged manner. When the relay Re is omitted, the processing of step S5 may be omitted.

Next, the controller Cnt obtains the charging rate of the power storage device B again (step S7). Note that an example of how to obtain the charging rate in step S7 is similar to an example of how to obtain the charging rate in step S3.

Next, if the charging rate obtained in step S7 is smaller than the upper limit value (step S8: No), then the controller Cnt controls the power generation of the fuel cell stack FCS (step S9), and executes the processing of step S7 again. For example, at the time of power generation control of the fuel cell stack FCS, the controller Cnt controls the operation of each auxiliary device such that the output power of the fuel cell stack FCS follows predetermined target generation power by proportional-integral (PI) control or the like. Specifically, at the time of power generation control of the fuel cell stack FCS, the controller Cnt controls the operations of the air compressor ACP and the air pressure regulating valve ARV such that the stoichiometric ratio of the oxidant gas supplied to the fuel cell stack FCS follows a target stoichiometric ratio corresponding to the target generation power. The target stoichiometric ratio is set to a constant value regardless of the deterioration degree obtained in step S1. That is, even when the deterioration degree changes, the stoichiometric ratio of the oxidant gas supplied to the fuel cell stack FCS is not changed. In other words, by changing the lower limit value and the upper limit value (changing the operating point of the fuel cell stack FCS), the deterioration of the output efficiency of the fuel cell stack FCS due to the deterioration of the fuel cell stack FCS is suppressed without changing the stoichiometric ratio of the oxidant gas.

On the other hand, if the charging rate obtained in step S7 becomes the upper limit value or more (step S8: Yes), then the controller Cnt ends the power generation control of the fuel cell stack FCS (step S10), causes the relay Re to transit from the closed state to the opened state (step S11), and executes the processing of steps S3 to S11 again. Note that the controller Cnt repeatedly executes the processing of steps S3 to S11 until receiving a stop instruction or the like from the controller Cs. In addition, after executing the processing of step S11, the controller Cnt may return to the processing of step S1 and change the lower limit value and the upper limit value based on a new deterioration degree. The controller Cnt may execute the processing of step S10 and the processing of step S11 in an interchanged manner. When the relay Re is omitted, the processing of step S11 may be omitted.

FIG. 4A is a diagram showing an example of an SOC-OCV characteristic showing the correspondence relationship between the charging rate of the power storage device B and the open-circuit voltage. FIG. 4B is a diagram showing an example of the I-V characteristic (I-V curve) showing the correspondence relationship between the output current and the output voltage of the fuel cell stack FCS. Note that the horizontal axis of the two-dimensional coordinates shown in FIG. 4A represents the charging rate, and the vertical axis represents a voltage. A solid line shown in FIG. 4A indicates the SOC-OCV characteristic. The horizontal axis of the two-dimensional coordinates illustrated in FIG. 4B represents a current (or a current density), and the vertical axis represents a voltage. A solid line shown in FIG. 4B indicates the I-V characteristic corresponding to the initial deterioration degree, a broken line indicates the I-V characteristic corresponding to the intermediate deterioration degree, and a dashed-dotted line indicates the I-V characteristic corresponding to the late deterioration degree. It is assumed that voltage V1 > voltage V1' > voltage V1" > voltage V2 > voltage V2' > voltage V2" is established. It is assumed that current I1' < current I1 < current I2' < current I2 is established.

In the SOC-OCV characteristic shown in FIG. 4A, the open-circuit voltage of the power storage device B increases as the charging rate of the power storage device B increases. In the I-V characteristic in FIG. 4B, the output current of the fuel cell stack FCS decreases as the output voltage of the fuel cell stack FCS increases. When the fuel cell stack FCS performs the power generation, the relay Re is in the closed state, so that the fuel cell stack FCS and the power storage device B are directly connected to each other, and the output voltage of the fuel cell stack FCS follows the voltage of the power storage device B. That is, when the fuel cell stack FCS performs the power generation, the output voltage of the fuel cell stack FCS and the voltage of the power storage device B become the same voltage. Therefore, the output voltage and the output current of the fuel cell stack FCS change in response to the change in the charging rate and the voltage of the power storage device B. For example, in the I-V characteristic (solid line) corresponding to the initial deterioration degree, when the charging rate of the power storage device B becomes 75% and the voltage of the power storage device B becomes the voltage V1, the output voltage of the fuel cell stack FCS follows the voltage V1, so that the output current of the fuel cell stack FCS becomes the current I1. When the charging rate of the power storage device B changes from 75% to 50% and the voltage of the power storage device B changes from the voltage V1 to the voltage V2, the output voltage of the fuel cell stack FCS follows the voltage V2, so that the output current of the fuel cell stack FCS changes from the current I1 to the current I2. That is, as the charging rate and voltage of the power storage device B decrease, the output voltage of the fuel cell stack FCS decreases and the output current of the fuel cell stack FCS increases, and as the charging rate and voltage of the power storage device B increase, the output voltage of the fuel cell stack FCS increases and the output current of the fuel cell stack FCS decreases. In other words, as the charging rate or the voltage of the power storage device B decreases, the operating point of the fuel cell stack FCS becomes deeper, and as the charging rate and the voltage of the power storage device B increase, the operating point of the fuel cell stack FCS becomes shallower.

In the I-V characteristic (solid line) corresponding to the initial deterioration degree, when the operating point of the fuel cell stack FCS becomes too shallow (when the output current of the fuel cell stack FCS is smaller than the current I1 or when the output voltage of the fuel cell stack FCS is larger than the voltage V1), the deterioration of the fuel cell stack FCS may further progress. In the I-V characteristic (solid line) corresponding to the initial deterioration degree, when the operating point of the fuel cell stack FCS becomes too deep (when the output current of the fuel cell stack FCS is larger than the current I2 or when the output voltage of the fuel cell stack FCS is smaller than the voltage V2), the deterioration of the fuel cell stack FCS may further progress, and the output efficiency of the fuel cell stack FCS may decrease.

Therefore, in the fuel cell module FCM of the embodiment, when the charging rate of the power storage device B becomes the lower limit value or less, the power generation of the fuel cell stack FCS is started to start increasing in the charging rate and the voltage of the power storage device B, and when the charging rate of the power storage device B becomes the upper limit value or more, the power generation of the fuel cell stack FCS is ended to stop increasing in the charging rate and the voltage of the power storage device B. For example, in the I-V characteristic (solid line) corresponding to the initial deterioration degree, when the charging rate of the power storage device B becomes 50% or less, which is the lower limit value, the controller Cnt starts the power generation control of the fuel cell stack FCS, and when the charging rate of the power storage device B becomes 75% or more, which is the upper limit value, the controller Cnt ends the power generation control of the fuel cell stack FCS.

As a result, the operating point of the fuel cell stack FCS becoming too shallow or too deep can be suppressed, so that further progressing of the deterioration of the fuel cell stack FCS can be suppressed, and lowering of the output efficiency of the fuel cell stack FCS can be suppressed.

However, when the deterioration of the fuel cell stack FCS progresses due to the increase in the power generation time of the fuel cell stack FCS, as shown in FIG. 4B, the I-V characteristic changes from the I-V characteristic (solid line) corresponding to the initial deterioration degree to the I-V characteristic (broken line) corresponding to the intermediate deterioration degree, and when the deterioration of the fuel cell stack FCS further progresses, the I-V characteristic changes from the I-V characteristic (broken line) corresponding to the intermediate deterioration degree to the I-V characteristic (dashed-dotted line) corresponding to the late deterioration degree. That is, as the deterioration of the fuel cell stack FCS progresses, the entire I-V characteristic (I-V curve) shifts in the direction in which the voltage decreases (vertical axis minus direction of the two-dimensional coordinates in FIG. 4B). Therefore, the output current of the fuel cell stack FCS corresponding to the predetermined output voltage of the fuel cell stack FCS decreases. For example, when the I-V characteristic changes from the I-V characteristic (solid line) corresponding to the initial deterioration degree to the I-V characteristic (dashed-dotted line) corresponding to the late deterioration degree as the deterioration of the fuel cell stack FCS progresses, the output current of the fuel cell stack FCS corresponding to the voltage V1 decreases from the current I1 to the current I1', and the output current of the fuel cell stack FCS corresponding to the voltage V2 decreases from the current I2 to the current I2'. Since the current I1' is smaller than the current I1, there is a concern that the deterioration of the fuel cell stack FCS may further progress. Since the variation range of the output current from the current I1' to the current I2' is narrower than the variation range of the output current from the current I1 to the current I2, there is a concern that the output efficiency of the fuel cell stack FCS may decrease.

Therefore, in the fuel cell module FCM of the embodiment, the lower limit value and the upper limit value of the charging rate of the power storage device B are changed based on the deterioration degree of the fuel cell stack FCS.

As a result, the lower limit value and the upper limit value can be changed so as to suppress the change in the variation range of the operating point of the fuel cell stack FCS with the change in the deterioration degree, so that even when the fuel cell stack FCS deteriorates, the fuel cell stack FCS can be caused to generate power at an appropriate operating point.

Specifically, the controller Cnt decreases the lower limit value and the upper limit value as the deterioration degree increases. For example, when the deterioration degree of the fuel cell stack FCS is the initial deterioration degree, the controller Cnt sets the lower limit value to 50% and the upper limit value to 75%. When the deterioration degree of the fuel cell stack FCS is the intermediate deterioration degree, the controller Cnt sets the lower limit value to 40% and the upper limit value to 65%. When the deterioration degree of the fuel cell stack FCS is the late deterioration degree, the controller Cnt sets the lower limit value to 30% and the upper limit value to 55%.

As a result, in the I-V characteristic (solid line) corresponding to the initial deterioration degree, the output current of the fuel cell stack FCS corresponding to the upper limit value 75% can be set to the current I1, and the output current of the fuel cell stack FCS corresponding to the lower limit value 50% can be set to the current I2. In the I-V characteristic (broken line) corresponding to the intermediate deterioration degree, the output current of the fuel cell stack FCS corresponding to the upper limit value 65% can be kept unchanged at the current I1, and the output current of the fuel cell stack FCS corresponding to the lower limit value 40% can be kept unchanged at the current I2. In the I-V characteristic (dashed-dotted line) corresponding to the late deterioration degree, the output current of the fuel cell stack FCS corresponding to the upper limit value 55% can be kept unchanged at the current I1, and the output current of the fuel cell stack FCS corresponding to the lower limit value 30% can be kept unchanged at the current I2. Therefore, even when the I-V characteristic changes as the deterioration of the fuel cell stack FCS progresses, the further progress of the deterioration of the fuel cell stack FCS as the operating point of the fuel cell stack FCS changes to an excessively shallow point (the output voltage of the fuel cell stack FCS becomes excessively high) can be suppressed. Even when the I-V characteristic changes as the deterioration of the fuel cell stack FCS progresses, the decrease in the output efficiency of the fuel cell stack FCS as the variation range of the operating point of the fuel cell stack FCS narrows can be suppressed. That is, in the fuel cell module FCM in which the power storage device B is directly connected between the fuel cell stack FCS and the load Lo, even when the fuel cell stack FCS deteriorates, the fuel cell stack FCS can be caused to generate power at an appropriate operating point.

The present invention is not limited to the above embodiments, and various improvements and changes can be made without departing from the gist of the present invention.

### <Modification 1>

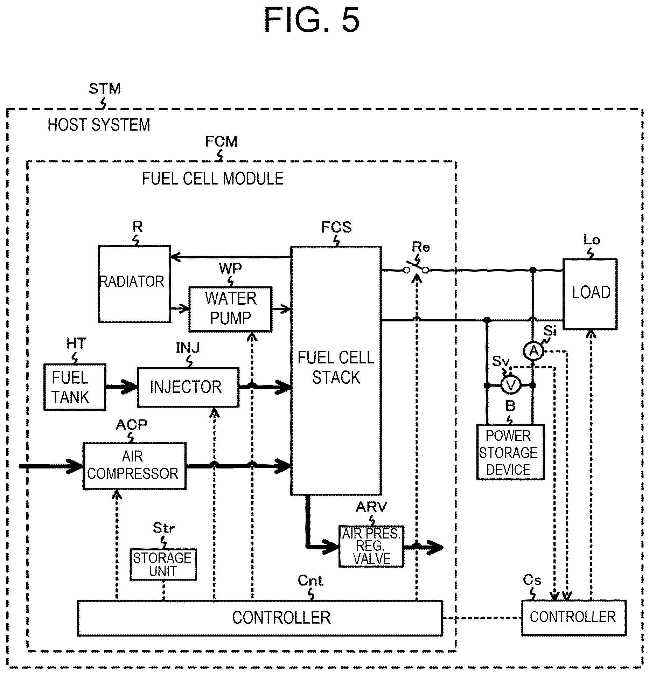

FIG. 5 is a diagram illustrating a modification of the fuel cell module of the embodiment. Note that the same configurations as those in the configurations illustrated in FIG. 1 are denoted by the same reference numerals, and description thereof will be omitted.

In FIG. 5, the power storage device B, the voltage sensor Sv, and the current sensor Si are provided outside the fuel cell module FCM (host system STM).

The controller Cs of the host system STM illustrated in FIG. 5 obtains the charging rate of the power storage device B based on the voltage V detected by the voltage sensor Sv and the current I detected by the current sensor Si, and sends the obtained charging rate to the controller Cnt.

The controller Cnt illustrated in FIG. 5 controls the power generation of the fuel cell stack FCS based on the charging rate sent from the controller Cs. The controller Cnt illustrated in FIG. 5 may obtain the charging rate of the power storage device B based on the voltage V and the current I sent from the controller Cs.

According to the fuel cell module FCM illustrated in FIG. 5, similarly to the fuel cell module FCM illustrated in FIG. 1, in the fuel cell module FCM in which the power storage device B is directly connected between the fuel cell stack FCS and the load Lo, even when the fuel cell stack FCS deteriorates, the fuel cell stack FCS can be caused to generate power at an appropriate operating point.

### <Modification 2>

In the above embodiment, the lower limit value and the upper limit value of the charging rate of the power storage device B are changed based on the deterioration degree of the fuel cell stack FCS. However, the lower limit value or the upper limit value of the charging rate of the power storage device B may be changed based on the deterioration degree of the fuel cell stack FCS.

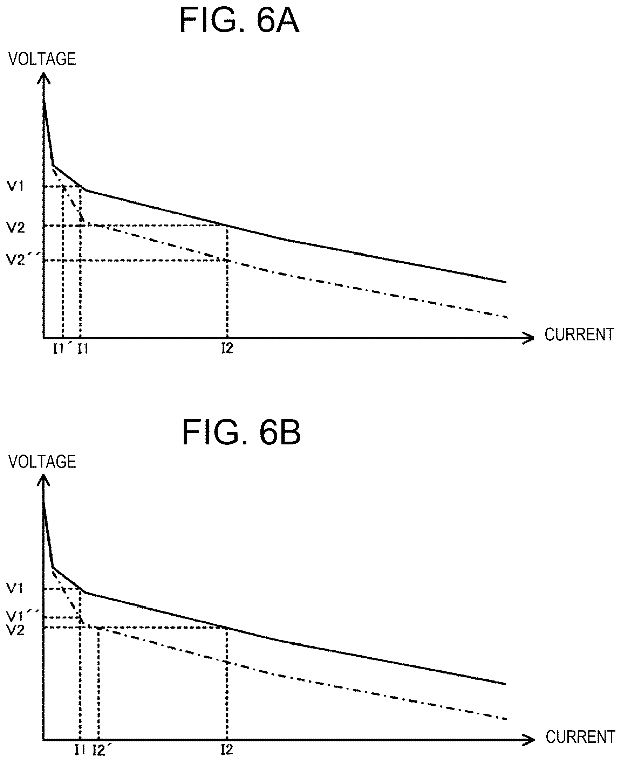

FIG. 6A is a diagram showing a variation example of an operating point of the fuel cell stack FCS when only the lower limit value is changed. The horizontal axis of the two-dimensional coordinates shown in FIG. 6A represents a current (or a current density), and the vertical axis represents a voltage. A solid line shown in FIG. 6A indicates the I-V characteristic corresponding to the initial deterioration degree and a dashed-dotted line indicates the I-V characteristic corresponding to the late deterioration degree. It is assumed that voltage V1 > voltage V2 > voltage V2" is established. It is assumed that current I1' < current I1 < current I2 is established.

For example, when the deterioration degree of the fuel cell stack FCS is the initial deterioration degree, the controller Cnt sets the lower limit value to 50% and the upper limit value to 75%. When the deterioration degree of the fuel cell stack FCS changes from the initial deterioration degree to the late deterioration degree, the controller Cnt changes the lower limit value from 50% to 30% and keeps the upper limit value at 75%.

As a result, in the I-V characteristic (solid line) corresponding to the initial deterioration degree, the output current of the fuel cell stack FCS corresponding to the upper limit value 75% can be set to the current I1, and the output current of the fuel cell stack FCS corresponding to the lower limit value 50% can be set to the current I2. In the I-V characteristic (dashed-dotted line) corresponding to the late deterioration degree, the output current of the fuel cell stack FCS corresponding to the upper limit value 75% can be set to the current I1', and the output current of the fuel cell stack FCS corresponding to the lower limit value 30% can be set to the current I2. Therefore, even when the I-V characteristic changes as the deterioration of the fuel cell stack FCS progresses, the decrease in the output efficiency of the fuel cell stack FCS as the variation range of the operating point of the fuel cell stack FCS narrows can be suppressed. That is, even when only the lower limit value is changed, the fuel cell stack FCS can be caused to generate power at an appropriate operating point.

FIG. 6B is a diagram showing a variation example of an operating point of the fuel cell stack FCS when only the upper limit value is changed. The horizontal axis of the two-dimensional coordinates shown in FIG. 6B represents a current (or a current density), and the vertical axis represents a voltage. A solid line shown in FIG. 6B indicates the I-V characteristic corresponding to the initial deterioration degree and a dashed-dotted line indicates the I-V characteristic corresponding to the late deterioration degree. It is assumed that voltage V1 > voltage V1" > voltage V2 is established. It is assumed that current I1 < current I2" < current I2 is established.

For example, when the deterioration degree of the fuel cell stack FCS is the initial deterioration degree, the controller Cnt sets the lower limit value to 50% and the upper limit value to 75%. When the deterioration degree of the fuel cell stack FCS changes from the initial deterioration degree to the late deterioration degree, the controller Cnt keeps the lower limit value at 50% and changes the upper limit value from 75% to 55%.

As a result, in the I-V characteristic (solid line) corresponding to the initial deterioration degree, the output current of the fuel cell stack FCS corresponding to the upper limit value 75% can be set to the current I1, and the output current of the fuel cell stack FCS corresponding to the lower limit value 50% can be set to the current I2. In the I-V characteristic (dashed-dotted line) corresponding to the late deterioration degree, the output current of the fuel cell stack FCS corresponding to the upper limit value 55% can be set to the current I1, and the output current of the fuel cell stack FCS corresponding to the lower limit value 50% can be set to the current 12'. Therefore, even when the I-V characteristic changes as the deterioration of the fuel cell stack FCS progresses, the further progress of the deterioration of the fuel cell stack FCS as the operating point of the fuel cell stack FCS changes to an excessively shallow point (the output voltage of the fuel cell stack FCS becomes excessively high) can be suppressed. That is, even when only the upper limit value is changed, the fuel cell stack FCS can be caused to generate power at an appropriate operating point.

### <Modification 3>

In the above embodiment, at least one of the lower limit value and the upper limit value is changed based on predetermined information (for example, information D shown in FIG. 3). Alternatively, an I-V characteristic before deterioration (for example, a solid line shown in FIG. 4B) and an I-V characteristic after deterioration (for example, a broken line or a dashed-dotted line shown in FIG. 4B) of the fuel cell stack FCS may be obtained by calculation, and at least one of the lower limit value and the upper limit value may be changed based on the I-V characteristic before deterioration and the I-V characteristic after deterioration obtained by the calculation such that the variation range of the operating point does not narrow or the operating point does not change to an excessively shallow point.

Even with such a configuration, in the fuel cell module FCM in which the power storage device B is directly connected between the fuel cell stack FCS and the load Lo, even when the fuel cell stack FCS deteriorates, the fuel cell stack FCS can be caused to generate power at an appropriate operating point.

### <Modification 4>

In the above embodiment, at least one of the lower limit value and the upper limit value is changed such that the variation range of the operating point of the fuel cell stack FCS in the I-V characteristic does not narrow or such that the operating point does not change to the excessively shallow point. However, at least one of the lower limit value and the upper limit value may be changed such that the variation range of the operating point of the fuel cell stack FCS in the I-P characteristic indicating the correspondence relationship between the output current (current density) and the output power of the fuel cell stack FCS does not narrow or such that the operating point does not change to the excessively shallow point.

Even with such a configuration, in the fuel cell module FCM in which the power storage device B is directly connected between the fuel cell stack FCS and the load Lo, even when the fuel cell stack FCS deteriorates, the fuel cell stack FCS can be caused to generate power at an appropriate operating point.

## Claims

1. A fuel cell module (FCM) comprising:
a fuel cell stack (FCS); and
a controller (Cnt) configured to start power generation of the fuel cell stack (FCS) when a charging rate of a power storage device (B) directly connected between the fuel cell stack (FCS) and a load (Lo) becomes a lower limit value or less, and configured to stop power generation of the fuel cell stack (FCS) when the charging rate of the power storage device (B) becomes an upper limit value or more, **characterized in that**
the fuel cell stack (FCS) is connected to the power storage device (B) not through a power conversion circuit, and
the controller (Cnt) changes at least one of the lower limit value and the upper limit value based on a deterioration degree of the fuel cell stack (FCS).

2. The fuel cell module (FCM) according to claim 1, **characterized in that**
a voltage of the power storage device (B) increases as the charging rate of the power storage device (B) increases,
an output current of the fuel cell stack (FCS) decreases as an output voltage of the fuel cell stack (FCS) increases,
an output voltage of the fuel cell stack (FCS) corresponding to a predetermined output current of the fuel cell stack (FCS) decreases as the deterioration degree increases, and
the controller (Cnt) decreases at least one of the lower limit value and the upper limit value as the deterioration degree increases.

3. The fuel cell module (FCM) according to claim 1, **characterized in that**
a required voltage of the load (Lo) is included in a range from a voltage of the power storage device (B) corresponding to the lower limit value to a voltage of the power storage device (B) corresponding to the upper limit value, and
an operating point of the fuel cell stack (FCS) when deterioration of the fuel cell stack (FCS) progresses is not included in a range from an operating point of the fuel cell stack (FCS) corresponding to the upper limit value to an operating point of the fuel cell stack (FCS) corresponding to the lower limit value.

4. The fuel cell module (FCM) according to claim 1, **characterized in that**
the controller (Cnt) obtains the deterioration degree based on an integrated value of power generation time of the fuel cell stack (FCS) or an internal resistance of the fuel cell stack (FCS).

5. The fuel cell module (FCM) according to any one of claims 1 to 4, **characterized in that**
a stoichiometric ratio of oxidant gas supplied to the fuel cell stack (FCS) is not changed even when the deterioration degree changes.
